(19) **Europäisches Patentamt European Patent Office Office européen des brevets**

(11) **EP 4 082 122 B1**

(12) **FASCICULE DE BREVET EUROPEEN**

(45) Date de publication et mention de la délivrance du brevet:
**27.08.2025 Bulletin 2025/35**

(21) Numéro de dépôt: **20830272.9**

(22) Date de dépôt: **23.12.2020**

(51) Classification Internationale des Brevets (IPC):
**H04B 1/10** *(2006.01)* **G01S 19/21** *(2010.01)*
**H04J 11/00** *(2006.01)* **H04L 25/02** *(2006.01)*
**H04B 17/336** *(2015.01)*

(52) Classification Coopérative des Brevets (CPC):
**H04B 1/1027; H04B 17/336; H04B 17/345;**
**H04J 11/0023; H04L 25/021; H04L 25/0242;**
**H04L 25/0256**

(86) Numéro de dépôt international:
**PCT/EP2020/087815**

(87) Numéro de publication internationale:
**WO 2021/130336 (01.07.2021 Gazette 2021/26)**

(54) **PROCÉDÉ DE DÉTECTION DE LA PRÉSENCE D'UN SIGNAL DE BROUILLAGE ET DISPOSITIFS ASSOCIÉS**

VERFAHREN UND VORRICHTUNGEN ZUR DETEKTIERUNG VON EINEM INTERFERENZSIGNAL

METHOD AND DEVICES FOR DETECTING THE PRESENCE OF AN INTERFERING SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.12.2019 FR 1915626**

(43) Date de publication de la demande:
**02.11.2022 Bulletin 2022/44**

(73) Titulaire: **THALES**
**92400 Courbevoie (FR)**

(72) Inventeurs:
• **MOLIÈRE, Renaud**
**92622 GENNEVILLIERS CEDEX (FR)**
• **PIPON, François**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**EP-A1- 2 579 063     US-A1- 2010 130 133**

• **ZHANG SHENGJUN ET AL: "Adaptive Transmit and Receive Beamforming Based on Subspace Projection for Anti-jamming", 2014 IEEE MILITARY COMMUNICATIONS CONFERENCE, IEEE, 6 October 2014 (2014-10-06), pages 388 - 393, XP032686370, DOI: 10.1109/ MILCOM.2014.70**

**Description**

La présente invention concerne un procédé de détection de la présence d'un signal de brouillage. La présente invention se rapporte également à un calculateur, un dispositif de réception, une plate-forme, un produit programme d'ordinateur et un support lisible d'informations associés.

Dans le domaine des télécommunications, un émetteur cherche à émettre un signal à un destinataire, appelé le récepteur. Idéalement, le récepteur recevrait un signal incident exactement égal au signal émis.

Toutefois, tel n'est pas le cas, le signal incident est déformé pour plusieurs raisons : le signal incident interagit avec l'environnement de sorte que le signal incident se propage selon des multitrajets de propagation, le signal incident est mélangé au bruit thermique produit par le récepteur et le signal incident est susceptible d'être brouillé (le terme « interférence » est souvent utilisé pour désigner ce dernier phénomène). Les sources de brouillage peuvent être multiples, l'une des plus fréquentes étant l'émission d'un autre signal sur un autre canal.

Il est donc souhaitable d'être capable de déterminer les différentes composantes du signal, qui sont le signal utile, le bruit thermique et le brouillage éventuel pour bien pouvoir extraire le signal utile.

Un exemple de tel extraction consiste à mettre au point un filtre dédié permettant, pour le récepteur considéré, de filtrer les composantes non utiles du signal, à savoir le bruit thermique et le brouillage éventuel.

Toutefois, une telle technique suppose de connaître précisément le récepteur et son fonctionnement.

On peut trouver des exemples de l'art antérieur dans les documents EP2579063 et US2010/130133.

Il existe donc un besoin pour un procédé de détection d'un brouillage dans un signal incident qui puisse être implémenté sur tout type de récepteur.

A cet effet, il est proposé un procédé de détection de la présence éventuelle d'un signal de brouillage dans un signal reçu par un dispositif de réception, le signal reçu comportant une composante utile et une composante non utile, le dispositif de réception comportant N voies de réception et un calculateur, N étant un entier supérieur ou égal à 2, le procédé étant mis en oeuvre par le calculateur, le procédé comportant une étape d'obtention d'au moins une matrice parmi une matrice d'autocorrelation du signal reçu par chaque voie de réception, et une matrice d'autocorrelation de la composante non utile pour obtenir au moins une matrice déterminée, une étape de calcul des valeurs propres de la au moins une matrice déterminée, une étape d'estimation du rapport signal à interférence plus bruit du signal recombiné, le signal recombiné étant obtenu par recombinaison des signaux de chacune des N voies de réception, et une étape de détection de la présence éventuelle d'un signal de brouillage en fonction d'au moins une des valeurs propres calculées et du rapport signal à interférence plus bruit estimé.

Suivant des modes de réalisation particuliers, le procédé de détection comprend une ou plusieurs des caractéristiques suivantes, prise(s) isolément ou suivant toutes les combinaisons techniquement possibles :

- l'étape de détection comporte l'application d'une fonction sur au moins une valeur propre, la comparaison à un seuil dépendant du rapport signal à interférence plus bruit estimé, et une détection de la présence éventuelle d'un brouillage en fonction du résultat de la comparaison.
- la fonction est une fonction identité, une fonction linéaire, une fonction trace, une fonction de division ou une fonction de multiplication.
- lors de l'étape de détection, chaque valeur propre est choisie dans la liste constituée de la valeur propre la plus grande de la matrice d'autocorrélation du signal reçu, la valeur propre la plus grande de la matrice d'autocorrélation de la composante non utile, la valeur propre la plus petite de la matrice d'autocorrélation du signal reçu, la valeur propre la plus petite de la matrice d'autocorrélation de la composante non utile.
- le procédé comporte, en outre, une étape d'un estimateur du rapport de puissance entre la puissance du signal de brouillage et la puissance du bruit thermique du dispositif de réception, l'estimateur dépendant des valeurs propres calculées

La présente description concerne aussi un calculateur adapté à détecter la présence éventuelle d'un signal de brouillage dans un signal reçu par un dispositif de réception, le signal reçu comportant une composante utile et une composante non utile, le dispositif de réception comportant N voies de réception, N étant un entier supérieur ou égal à 2, le calculateur étant propre à obtenir au moins une matrice parmi une matrice d'autocorrélation du signal reçu par chaque voie de réception, et une matrice d'autocorrélation de la composante non utile pour obtenir au moins une matrice déterminée, à calculer des valeurs propres de la au moins une matrice déterminée, à estimer le rapport signal à interférence plus bruit du signal recombiné, le signal recombiné étant obtenu par recombinaison des signaux de chacune des N voies de réception, et à détecter la présence éventuelle d'un signal de brouillage en fonction d'au moins une des valeurs propres calculées et du rapport signal à interférence plus bruit estimé.

La présente description se rapporte également à un dispositif de réception comportant un calculateur tel que précédemment décrit.

La présente description concerne aussi une plate-forme comportant un dispositif de réception tel que précédemment décrit ou un calculateur tel que précédemment décrit.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins une étape d'un procédé tel que précédemment décrit lorsque le programme d'ordinateur est mis en œuvre sur l'unité de traitement des données.

La présente description concerne aussi un support lisible d'informations comportant des instructions de programme formant un programme d'ordinateur, le programme d'ordinateur étant chargeable sur une unité de traitement de données et adapté pour entraîner la mise en œuvre d'au moins une étape d'un procédé tel que précédemment décrit lorsque le programme d'ordinateur est mis en œuvre sur l'unité de traitement de données.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une vue schématique d'une plate-forme, et
- figure 2, un ordinogramme d'un exemple de mise en œuvre d'un procédé de détection d'un signal de brouillage.

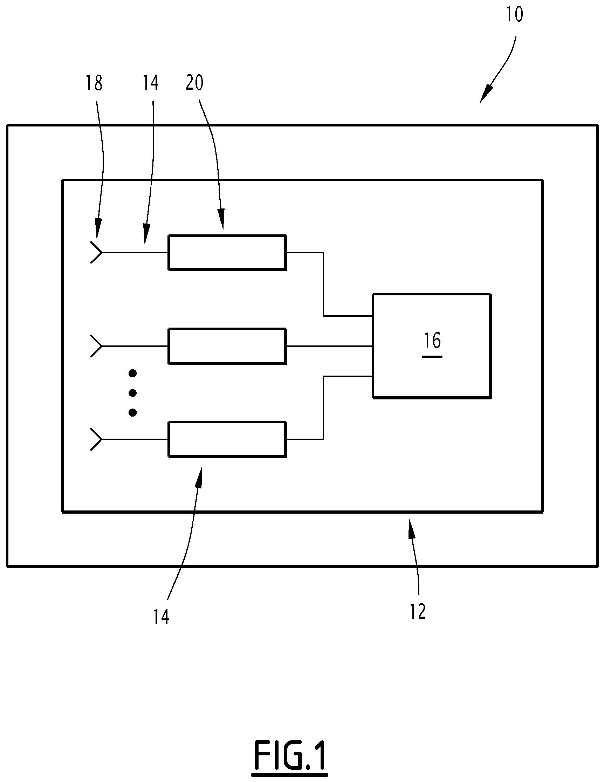

Une plate-forme 10 est illustrée schématiquement sur la figure 1.

Par exemple, la plate-forme 10 est un aéronef comme un avion, un hélicoptère, un drone.

En variante, la plate-forme 10 est un engin non-volant.

La plate-forme 10 comporte un ensemble d'éléments parmi lesquels un dispositif de réception 12.

Le dispositif de réception 12 comporte N voies de réception 14 et un calculateur 16.

N est un nombre entier supérieur ou égal à 2.

Chaque voie de réception est repérée par un indice i respectif, l'indice i est un entier compris entre 1 et N.

Selon l'exemple de la figure 1, seules trois voies de réception 14 sont représentées dans un souci de clarté.

Chaque voie de réception 14 comporte une antenne 18 et une chaîne de traitement 20.

L'antenne 18 est propre à convertir un signal incident dit signal reçu en un signal analogique.

Le signal reçu par l'antenne 18 est un signal radiofréquence.

Le signal reçu sur la i-ième voie de réception 14 est noté $x_i(t)$.

Dans le présent exemple, le signal reçu sur une voie de réception 14 correspond à la somme de trois composantes de signaux, à savoir une composante de signal utile notée $s_i(t)$, une composante de bruit thermique notée $b_i(t)$ et une composante de signal d'interférence notée $j_i(t)$.

La composante de signal d'interférence $j_i(t)$ est un signal de brouillage dont on cherche la présence éventuelle ou non.

L'ensemble des composantes de bruit thermique notée $b_i(t)$ et des composantes de signal d'interférence notée $j_i(t)$ forme une composante de signal non utile.

Cela s'écrit mathématiquement comme :

$$\boldsymbol{X}(t) = \boldsymbol{S}(t) + \boldsymbol{J}(t) + \boldsymbol{B}(t) = \begin{pmatrix} s_1(t) \\ \vdots \\ s_i(t) \\ \vdots \\ s_N(t) \end{pmatrix} + \begin{pmatrix} j_1(t) \\ \vdots \\ j_i(t) \\ \vdots \\ j_N(t) \end{pmatrix} + \begin{pmatrix} b_1(t) \\ \vdots \\ b_i(t) \\ \vdots \\ b_N(t) \end{pmatrix}$$

La composante de signal utile $s_i(t)$ est généralement une somme de signaux.

Plus précisément, la composante de signal utile $s_i(t)$ la somme des différents trajets du signal utile. Dans le cas général, l'expression de $s_i(t)$ est ainsi :

$$s_i(t) = \sum_{p=1}^{P} h_{i,p} * s\big(t - \tau_p\big)$$

Où $\tau_p$ est le retard du trajet p et $h_{i,p}$ est le coefficient de canal du trajet p de l'antenne i.

Il est alors considéré une durée maximale de retard d'un multitrajet en fonction du canal de propagation. Cette valeur maximale dépend du contexte d'utilisation (terrestre, aérien), de l'environnement (relief, présence de réflecteurs) et de la bande de fréquence utilisée.

En considérant un signal numérique, une telle durée maximale se traduit en un nombre de symbole. Dans ce cas, la relation précédente peut s'écrire de façon matricielle :

$$s_i(t) = \boldsymbol{h_i} * \boldsymbol{s}(t) = (h_{i,1} \quad ... \quad h_{i,p} \quad ... \quad h_{i,P}) \begin{pmatrix} s(t) \\ \vdots \\ s(t-p) \\ \vdots \\ s(t-p+1) \end{pmatrix}$$

En tenant compte de l'ensemble des N voies de réception 14, il est obtenu l'équation suivante :

$$S(t) = H * \boldsymbol{s}(t)$$

Où $H = \begin{pmatrix} \boldsymbol{h_1} \\ \vdots \\ \boldsymbol{h_i} \\ \vdots \\ \boldsymbol{h_N} \end{pmatrix}$ est une matrice de taille N*P (N antennes et P trajets).

Similairement, la composante de signal d'interférence notée $j_i(t)$ comprend usuellement plusieurs signaux d'interférence indépendants. Dans le cas général, on a donc :

$$j_i(t) = \sum_{k=1}^{K} j_{i,k}(t)$$

De la même manière que pour la composante de signal utile, chaque composante de signal d'interférence est de la somme multi-trajet. Il est également possible de mettre en œuvre une numérisation des signaux pour conduire à une expression similaire à la formule précédente.

Le calculateur 16 est propre à collecter les mesures issues sur chaque voie de réception 14 pour effectuer des traitements permettant d'extraire le signal utile.

En particulier, selon l'exemple décrit, le calculateur 16 est propre à former des vecteurs à partir des mesures collectées.

Plus précisément, le calculateur 16 forme un vecteur de signal reçu noté X(t) à partir de chacune des signaux reçus sur les voies de réceptions 14 qui comprend trois composantes, la composante du signal utile S(t), la composante du bruit thermique B(t) et la composante de brouillage J(t).

En outre, le calculateur 16 est propre à mettre en œuvre un procédé de détection de la présence d'un signal de brouillage.

Le calculateur 16 est un calculateur électronique propre à manipuler et/ou transformer des données représentées comme des quantités électroniques ou physiques dans des registres du système et/ou des mémoires en d'autres données similaires correspondant à des données physiques dans des mémoires, des registres ou d'autres types de dispositifs d'affichage, de transmission ou de mémorisation.

Le calculateur 16 comporte un processeur comprenant une unité de traitement de données, des mémoires et un lecteur de support d'informations. Le calculateur comprend également un clavier et une unité d'affichage.

En tant qu'exemples spécifiques, le calculateur 16 comprend un processeur monocœur ou multicœurs (tel qu'une unité de traitement centrale (CPU), une unité de traitement graphique (GPU), un microcontrôleur et un processeur de signal numérique (DSP)), un circuit logique programmable (comme un circuit intégré spécifique à une application (ASIC), un réseau de portes programmables *in situ* (FPGA), un dispositif logique programmable (PLD) et des réseaux logiques programmables (PLA)), une machine à états, une porte logique et des composants matériels discrets.

Le produit programme d'ordinateur comporte un support lisible d'informations.

Un support lisible d'informations est un support lisible par le calculateur 16, usuellement par le lecteur. Le support lisible d'informations est un médium adapté à mémoriser des instructions électroniques et capable d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en œuvre du procédé de détection.

La chaîne de traitement 20 est propre à mettre en œuvre une ou plusieurs opérations sur le signal reçu.

En particulier, la chaîne de traitement 20 est propre à réaliser une conversion numérique du signal analogique reçu.

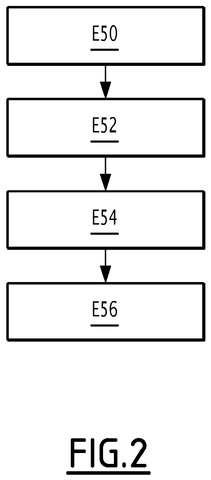

Le fonctionnement du dispositif de réception 12 est maintenant illustré en référence à la figure 2 qui est un exemple de mise en œuvre d'un procédé de détection de la présence d'un signal de brouillage.

Le procédé de détection de la présence d'un signal de brouillage vise à détecter la présence d'un signal de brouillage dans un signal reçu par un dispositif de réception 12.

Autrement formulé, le procédé de détection vise à détecter si le signal de brouillage J(t) est présent.

Le procédé de détection est mis en œuvre par le calculateur 16.

Le procédé de détection comporte une étape d'obtention E50, une étape de calcul E52, une étape d'estimation E54 et une étape de détection E56.

Lors de l'étape d'obtention E50, il est obtenu deux matrices.

La première matrice déterminée est la matrice d'autocorrélation du signal reçu, cette matrice étant notée $R_{xx}$.

Par définition, $R_{XX} = E(X(t).X(t)^H)$ où $E()$ est une opération de moyenne, « . » est une opération de multiplication et « $^H$ » est une opération de conjugaison hermitienne.

La deuxième matrice déterminée est la matrice d'autocorrélation de signal non utile, cette matrice étant notée R.

Par définition,

$$R = E((B(t) + J(t)).\big(B(t) + J(t)\big)^{H})$$

Selon un premier exemple, à l'étape d'obtention E50, les deux matrices sont reçues par le calculateur 16.

Selon un deuxième exemple, l'étape d'obtention E50 comporte une sous-étape de collection des signaux reçus, une sous-étape de formation et une sous-étape de calcul.

Lors de l'étape de sous-étape de collection, il est collecté l'ensemble des signaux reçus par chaque voie de réception.

Lors de la sous-étape de formation, il est formé le vecteur du signal total X à partir des signaux collectés.

Lors de la sous-étape de calcul, il est calculé la première matrice $R_{xx}$ par application de la formule précédente sur le vecteur du signal total X.

La deuxième matrice R est obtenue par application de la formule précédente sur une estimation du bruit fourni au calculateur 16.

L'estimation du bruit est, par exemple, fournie par une estimation de la matrice de canal *H* définie par la formule précédente.

Une telle matrice de canal *H* est, par exemple, estimée par l'exploitation de séquences de références, suite de symboles connus placés à des instants connus du signal reçu.

La matrice de canal *H* est ensuite utilisée pour calculer une estimée de la matrice $R_{SS} = E(S(t) * S(t)^H)$.

L'obtention d'une estimée de la matrice *R* est ensuite obtenue par l'opération de soustraction $R = R_{XX} - R_{SS}$.

Toute autre méthode permettant l'obtention d'estimations des matrices $R_{XX}$, R et $R_{SS}$ est également envisageable.

Lors de l'étape de calcul E52, il est calculé les valeurs propres de chacune des matrices déterminées.

Toute technique de détermination de valeurs propres est envisageable dans l'étape de calcul, par exemple une technique de triangularisation.

A l'issue de l'étape de calcul E52, il est ainsi obtenu un ensemble de valeurs propres pour chacune des matrices.

En particulier, il est ainsi connu la plus grande valeur propre de la matrice d'autocorrélation du signal non utile $\lambda_1$ (R), la plus petite valeur propre de la matrice d'autocorrélation du signal non utile $\lambda_N$(R), la plus grande valeur propre de la matrice d'autocorrélation du signal total reçu $\lambda_1(R_{xx})$ et la plus petite valeur propre de la matrice d'autocorrélation du signal total reçu $\lambda_N(R_{xx})$.

La relation d'ordre (plus petite ou plus grande) est à entendre en valeur absolue. La plus grande valeur propre est ainsi, par exemple, la plus grande valeur en valeur absolue.

Le signal de chacune des voies de réception 14 est ensuite recombiné pour obtenir un signal recombiné.

Pour cela, il est utilisé le principe des traitements adaptatifs spatiaux.

Le principe des traitements adaptatifs spatiaux est de déterminer le vecteur de pondération w avec lequel le signal le signal X(t) est recombiné en un signal y afin d'obtenir un signal monovoie selon la formule :

$$y(t) = \boldsymbol{w}^H * \boldsymbol{X}(t)$$

Où $^H$ est la transposée hermitienne et * est l'opération de conjugué.

La quantité y(t) est ici un scalaire.

La formule précédente est une application à un filtrage spatial uniquement, résultant de la recombinaison des antennes.

En variante, il est utilisé des structures spatio-temporelles qui font intervenir des symboles issus d'instants antérieurs dans la recombinaison.

Selon une autre variante ou en complément, le traitement d'antenne est réalisé dans le domaine fréquentiel.

Le calcul du vecteur w s'effectue dans le but d'optimiser le rapport signal à interférence plus bruit estimé à l'étape qui suit.

Lors de l'étape d'estimation E54, il est estimé le rapport signal à interférence plus bruit.

Un tel rapport signal à interférence plus bruit est plus souvent désigné sous l'acronyme SINR qui renvoie à la dénomination anglaise de « signal-to-interference-plus-noise ratio ». Dans la suite, le terme « rapport RSBI » est utilisé pour désigner le rapport signal à interférence plus bruit.

Le rapport RSBI correspond au rapport en puissance entre d'une part le signal utile S(t)) et d'autre part la somme du bruit thermique B(t) et de la composante de brouillage J(t). Le rapport RSBI est ainsi défini par la relation :

$$RSBI = \frac{P_S}{P_J + P_B}$$

Où $P_S$ est la puissance du signal utile S(t), $P_B$ la puissance du bruit thermique B(t) et $P_J$ la puissance de la composante de brouillage J(t).

La puissance instantanée du signal total reçu s'écrit selon la formule suivante :

$$P_X = X(t)^H * X(t)$$

Une opération similaire peut être définie pour obtenir les valeurs de $P_S, P_J$ et $P_B$.

Dans le cas où le bruit thermique est modélisé par un bruit blanc gaussien, il est d'usage d'assimiler la puissance du bruit thermique $P_B$ à la variance de la variable aléatoire notée $\sigma^2$.

Selon un exemple particulier, l'estimation du rapport RSBI comprend une estimation de la puissance du signal utile réalisée à partir de calculs sur les séquences de référence du signal reçu. Cette estimation constitue le numérateur de la formule précédente.

L'estimation théorique de la puissance de bruit en sortie de traitement spatial par recombinaison selon le vecteur w est $P_J + P_B = w^H R w$. On précise que cette étape d'estimation peut se calculer directement à partir de traitement sur le signal recombiné y. Celui-ci étant monovoie, des techniques classiques d'estimation du Rapport Signal sur Bruit (RSB) peuvent s'appliquer et donneront des valeurs similaires du rapport RSBI.

A l'issue de l'étape d'estimation E54, le rapport RSBI est ainsi connu.

Lors de l'étape de détection E56, il est détecté la présence ou l'absence d'un brouillage en fonction d'au moins une valeur propre calculée et du rapport RSBI estimé.

Pour mettre en oeuvre une telle étape de détection E56, plusieurs techniques vont être décrites, sachant que ces techniques peuvent être combinées entre elles.

Par exemple, il est détecté la présence d'un brouillage uniquement lorsque les deux techniques indiquent la présence du brouillage. Si une technique indique la présence d'un brouillage et l'autre non, il est détecté une absence de brouillage.

Selon une première technique, il est comparé la plus grande valeur propre de la matrice d'autocorrélation du signal non utile $\lambda_1(R)$ avec un seuil S.

Le seuil S dépend du rapport RSBI.

Des simulations de l'évolution de la plus grande valeur propre de la matrice d'autocorrélation du signal non utile $\lambda_1(R)$ avec la valeur du rapport RSBI estimée en présence de brouillage et sans brouillage permettent de déterminer ce seuil.

Le seuil correspond alors à la différence minimale permettant de discriminer entre les deux situations.

A titre d'exemple particulier, si l'évolution de plus grande valeur propre de la matrice d'autocorrélation du signal non utile $\lambda_1(R)$ en fonction du rapport RSBI est, en l'absence de brouillage, supérieure à une constante a positive, de telle sorte que $\lambda_1(R) > a$ sur l'ensemble de la plage de RSBI considérée alors que l'évolution en présence de brouillage est une fonction linéaire décroissante $\lambda_1(R) = a - b*RSBI$ avec b une constante négative, le seuil S peut être choisi comme égal à 99% de a.

Une autre manière d'appréhender ce mécanisme est de considérer la variation du seuil en fonction du rapport RSBI.

Ce seuil S est, par exemple, constant en fonction du rapport RSBI.

Selon un autre exemple, le seuil S est une fonction affine du rapport RSBI.

Selon l'exemple décrit, lorsque la plus grande valeur propre de la matrice d'autocorrélation du signal non utile $\lambda_1$(R) est strictement inférieure au seuil S, il est détecté la présence d'un signal de brouillage.

A contrario, lorsque la plus grande valeur propre de la matrice d'autocorrélation du signal non utile $\lambda_1$(R) est strictement supérieure au seuil S, il est détecté l'absence d'un signal de brouillage.

Selon une variante plus élaborée, un intervalle de non détermination (zone de doute) est prévu prenant en compte une marge de sécurité.

Ainsi, lorsque la plus grande valeur propre de la matrice d'autocorrélation du signal non utile $\lambda_1$(R) est strictement inférieure à 110% du seuil S, il est détecté la présence d'un signal de brouillage.

A contrario, lorsque la plus grande valeur propre de la matrice d'autocorrélation du signal non utile $\lambda_1$(R) est strictement supérieure à 90% du seuil S, il est détecté l'absence d'un signal de brouillage.

Pour les cas où la plus grande valeur propre de la matrice d'autocorrélation du signal non utile $\lambda_1$(R) est comprise entre 90% du seuil S et 110% du seuil S, il n'est pas possible de discriminer entre la présence et l'absence d'un signal de brouillage.

La marge de sécurité de 10% proposée à titre d'exemple peut être réduite ou augmentée selon la sensibilité de détection.

Selon une deuxième technique, au lieu de comparer la plus grande valeur propre de la matrice d'autocorrélation du signal non utile $\lambda_1$(R) avec un seuil, c'est le rapport entre la plus grande valeur propre de la matrice d'autocorrélation du signal reçu $\lambda_1$($R_{xx}$) et la plus grande valeur propre de la matrice d'autocorrélation du signal non utile $\lambda_1$(R) qui est comparé.

Selon une troisième technique, au lieu de comparer la plus grande valeur propre de la matrice d'autocorrélation du signal non utile $\lambda_1$(R) avec un seuil, c'est le rapport entre la plus grande valeur propre de la matrice d'autocorrélation du signal reçu $\lambda_1$($R_{xx}$) et la plus petite valeur propre de la matrice d'autocorrélation du signal non utile $\lambda_N$(R) qui est comparé.

Chaque technique correspond ainsi à une suite d'opérations suivantes : application d'une fonction sur au moins une valeur propre, comparaison à un seuil dépendant du rapport RSBI estimé et détection de la présence d'un brouillage en fonction du résultat de la comparaison.

Des exemples ont été montrées pour une fonction égale à une fonction d'identité ou une fonction de division.

Toutefois, d'autres fonctions sont envisageables comme une fonction de multiplication.

Par ailleurs, les valeurs propres utilisées dans les exemples sont les valeurs extrêmes.

Néanmoins, l'emploi de valeurs propres non extrêmes est aussi envisageable, notamment d'une combinaison linéaire de ces valeurs.

Ainsi, en variante ou en complément, la trace des matrices (somme des éléments diagonaux) est également utilisée.

Dans chacun des cas précités, il est déterminé si un brouillage est absent ou présent (à une marge de doute près pour certains modes de réalisation).

Le procédé de détection donne donc une information sur la présence éventuelle d'un brouillage.

Le procédé repose sur un traitement numérique de signaux provenant de plusieurs voies de réception. La mise en oeuvre du procédé implique seulement une modification du fonctionnement du calculateur et aucun ajout de matériel supplémentaire dans la plate-forme 10. Le procédé exploite, en effet, un ensemble de techniques mises en œuvre classiquement dans un système de type SIMO (acronyme renvoyant au terme anglais de « single input multiple output » signifiant littéralement « entrée unique, sorties multiples »)

Le procédé est donc de mise en oeuvre aisée.

En outre, le procédé ne suppose pas d'obtenir une connaissance a priori des antennes et notamment de leur position. En ce sens, le procédé fonctionne indépendamment des antennes.

Le procédé est applicable à tout dispositif de réception comportant plusieurs voies de réceptions, même uniquement deux. En particulier, le procédé est utilisable pour d'autres systèmes que des systèmes de navigation par satellite.

Par ailleurs, le procédé est robuste dans la mesure où le procédé ne dépend pas de la forme d'onde du brouilleur. Le procédé est capable de détecter toute forme d'onde de brouillage comme un brouilleur à bande étroite, bande large ou un canal à bruit blanc additif gaussien (plus souvent désigné sous l'abréviation BBAG).

La robustesse provient également du fait que le procédé fonctionne également pour des rapports signal à bruit faibles, même lorsque ces rapports signal à bruit sont inférieurs aux points de fonctionnement nominaux du dispositif de réception.

La présent procédé s'applique en outre sans limitations d'emploi concernant la bande de fréquence, et particulièrement dans les bandes HF (acronyme de Hautes Fréquences), UHF (acronyme de Ultra Hautes Fréquences) ou la bande C (de 4 GHz à 8 GHz).

En outre, le procédé a été présenté dans le cadre de traitements SIMO mais s'applique de manière identique aux traitements MIMO (acronyme renvoyant au terme anglais de « multiple input multiple output » signifiant littéralement « entrées multiples, sorties multiples.

Le procédé permet même d'analyser des caractéristiques du brouilleur en fournissant une information sur la puissance. En ce sens, le procédé de détection peut s'interpréter comme un procédé de caractérisation ou un procédé d'analyse.

Pour cela, par exemple, le procédé comporte une étape de calcul d'un estimateur du rapport de puissance RP entre la puissance du signal de brouillage J(t) et la puissance du bruit thermique B(t).

L'estimateur dépend d'au moins une valeur propre calculée précédemment.

Par exemple, un estimateur est le rapport entre la plus grande valeur propre de la matrice d'autocorrélation du signal non utile $\lambda_1(R)$ et la plus faible valeur propre de la matrice d'autocorrélation du signal non utile $\lambda_N(R)$.

Un tel estimateur peut être amélioré dans le cas où le niveau de bruit est connu parce qu'il a été fourni au calculateur 16. Le niveau de bruit est noté $\sigma^2$ et est lié au facteur de bruit de la chaine de réception.

Dans un tel cas, le procédé comporte une étape supplémentaire de calcul d'un estimateur du rapport de puissance RP en fonction des valeurs propres et du niveau de bruit fourni.

Selon l'exemple décrit, il est considéré que l'estimateur est égal au rapport entre la plus grande valeur propre de la matrice d'autocorrélation du signal non utile $\lambda_1(R)$ et le niveau de bruit.

Le procédé de détection est ainsi également un procédé de caractérisation d'un signal de brouillage lorsqu'un tel signal est présent.

Dans certains cas, le procédé est également propre à donner une indication du nombre de brouilleurs (dans le cas où le nombre d'antennes est en adéquation avec le nombre de brouilleurs).

## Revendications

1. Procédé de détection de la présence éventuelle d'un signal de brouillage dans un signal reçu par un dispositif de réception (12), le signal reçu comportant une composante utile et une composante non utile, le dispositif de réception (12) comportant N voies de réception (14) et un calculateur (16), N étant un entier supérieur ou égal à 2, le procédé étant mis en œuvre par le calculateur (16), le procédé comportant une étape de :

   - obtention d'au moins une matrice parmi une matrice d'autocorrélation du signal reçu par chaque voie de réception (14), et une matrice d'autocorrélation de la composante non utile pour obtenir au moins une matrice déterminée,
   - calcul des valeurs propres de la au moins une matrice déterminée,
   - estimation du rapport signal à interférence plus bruit du signal recombiné, le signal recombiné étant obtenu par recombinaison des signaux de chacune des N voies de réception (14), et
   - détection de la présence éventuelle d'un signal de brouillage en fonction d'au moins une des valeurs propres calculées et du rapport signal à interférence plus bruit estimé.

2. Procédé selon la revendication 1, dans lequel, l'étape de détection comporte :

   - l'application d'une fonction sur au moins une valeur propre, pour obtenir une valeur,
   - la comparaison de la valeur obtenue à un seuil dépendant du rapport signal à interférence plus bruit estimé, et
   - une détection de la présence éventuelle d'un brouillage en fonction du résultat de la comparaison.

3. Procédé selon la revendication 2, dans lequel la fonction est une fonction identité, une fonction linéaire, une fonction trace, une fonction de division ou une fonction de multiplication.

4. Procédé selon l'une quelconque des revendications 1 à 3, dans lequel, lors de l'étape de détection, chaque valeur propre est choisie dans la liste constituée de la valeur propre la plus grande de la matrice d'autocorrélation du signal reçu, la valeur propre la plus grande de la matrice d'autocorrélation de la composante non utile, la valeur propre la plus petite de la matrice d'autocorrélation du signal reçu, la valeur propre la plus petite de la matrice d'autocorrélation de la composante non utile.

5. Procédé selon l'une quelconque des revendications 1 à 4, dans lequel, le procédé comporte, en outre, une étape d'un estimateur du rapport de puissance entre la puissance du signal de brouillage et la puissance du bruit thermique du dispositif de réception (12), l'estimateur dépendant des valeurs propres calculées.

6. Calculateur (16) adapté à détecter la présence éventuelle d'un signal de brouillage dans un signal reçu par un dispositif de réception (12), le signal reçu comportant une composante utile et une composante non utile, le dispositif de réception (12) comportant N voies de réception (14), N étant un entier supérieur ou égal à 2, le calculateur (16) étant propre à :

- obtenir au moins une matrice parmi une matrice d'autocorrélation du signal reçu par chaque voie de réception (14), et une matrice d'autocorrélation de la composante non utile pour obtenir au moins une matrice déterminée,
- calculer des valeurs propres de la au moins une matrice déterminée,
- estimer le rapport signal à interférence plus bruit du signal recombiné, le signal recombiné étant obtenu par recombinaison des signaux de chacune des N voies de réception (14), et
- détecter la présence éventuelle d'un signal de brouillage en fonction d'au moins une des valeurs propres calculées et du rapport signal à interférence plus bruit estimé.

7. Dispositif de réception (12) comportant un calculateur (16) selon la revendication 6.

8. Plate-forme (10) comportant un dispositif de réception (12) selon la revendication 7 ou un calculateur (16) selon la revendication 6.

9. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'au moins une étape d'un procédé selon l'une quelconque des revendications 1 à 5 lorsque le programme d'ordinateur est mis en œuvre sur l'unité de traitement des données.

10. Support lisible d'informations comportant des instructions de programme formant un programme d'ordinateur, le programme d'ordinateur étant chargeable sur une unité de traitement de données et adapté pour entraîner la mise en œuvre d'au moins une étape d'un procédé selon l'une quelconque des revendications 1 à 5 lorsque le programme d'ordinateur est mis en œuvre sur l'unité de traitement de données.

**Patentansprüche**

1. Verfahren zum Erkennen des möglichen Vorhandenseins eines Störsignals in einem von einer Empfangsvorrichtung (12) empfangenen Signal, wobei das empfangene Signal eine Nutzkomponente und eine Nicht-Nutzkomponente umfasst, wobei die Empfangsvorrichtung (12) N Empfangskanäle (14) und einen Rechner (16) umfasst, wobei N eine ganze Zahl größer als oder gleich wie 2 ist, wobei das Verfahren von dem Rechner (16) durchgeführt wird, wobei das Verfahren einen folgenden Schritt umfasst:

   - Erlangen mindestens einer Matrix aus einer Autokorrelationsmatrix des Signals, das von jedem Empfangskanal (14) empfangen wird, und einer Autokorrelationsmatrix der nicht nützlichen Komponente, um mindestens eine bestimmte Matrix zu erlangen,
   - Berechnen der Eigenwerte der mindestens einen bestimmten Matrix,
   - Schätzen des Verhältnisses von Signal zu Interferenz plus Rauschen des rekombinierten Signals, wobei das rekombinierte Signal durch Rekombinieren der Signale von jedem der N Empfangskanäle (14) erlangt wird, und
   - Erkennen des möglichen Vorhandenseins eines Störsignals abhängig von mindestens einem der berechneten Eigenwerte und dem geschätzten Verhältnis von Störsignal plus Rauschen.

2. Verfahren nach Anspruch 1, wobei der Schritt eines Erkennens umfasst:

   - Anwenden einer Funktion auf mindestens einen Eigenwert, um einen Wert zu erlangen, Vergleichen des erlangten Werts mit einem Schwellenwert, der von dem geschätzten Verhältnis von Signal zu Interferenz plus Rauschen abhängt, und
   - Erkennen, ob eine Störung vorliegt, abhängig von dem Resultat des Vergleichs.

3. Verfahren nach Anspruch 2, wobei die Funktion eine Identitätsfunktion, eine lineare Funktion, eine Verfolgungsfunktion, eine Divisionsfunktion oder eine Multiplikationsfunktion ist.

4. Verfahren nach einem der Ansprüche 1 bis 3, wobei bei dem Schritt eines Erkennens jeder Eigenwert ausgewählt wird aus der Liste, bestehend aus dem größten Eigenwert der Autokorrelationsmatrix des empfangenen Signals, dem größten Eigenwert der Autokorrelationsmatrix der nicht nützlichen Komponente, dem kleinsten Eigenwert der Autokorrelationsmatrix des empfangenen Signals, dem kleinsten Eigenwert der Autokorrelationsmatrix der nicht nützlichen Komponente.

**5.** Verfahren nach einem der Ansprüche 1 bis 4, wobei das Verfahren ferner einen Schritt eines Schätzers des Leistungsverhältnisses zwischen der Leistung des Störsignals und der Leistung des thermischen Rauschens der Empfangsvorrichtung (12) umfasst, wobei der Schätzer von den berechneten Eigenwerten abhängt.

**6.** Rechner (16), der geeignet ist, um das mögliche Vorhandensein eines Störsignals in einem von einer Empfangsvorrichtung (12) empfangenen Signal zu erkennen, wobei das empfangene Signal eine Nutzkomponente und eine Nicht-Nutzkomponente umfasst, wobei die Empfangsvorrichtung (12) N Empfangskanäle (14) umfasst, wobei N eine ganze Zahl größer als oder gleich wie 2 ist, wobei der Rechner (16) zu Folgendem geeignet ist:

- Erlangen mindestens einer Matrix aus einer Autokorrelationsmatrix des Signals, das von jedem Empfangskanal (14) empfangen wird, und einer Autokorrelationsmatrix der nicht nützlichen Komponente, um mindestens eine bestimmte Matrix zu erlangen,
- Berechnen der Eigenwerte der mindestens einen bestimmten Matrix,
- Schätzen des Verhältnisses von Signal zu Interferenz plus Rauschen des rekombinierten Signals, wobei das rekombinierte Signal durch Rekombinieren der Signale von jedem der N Empfangskanäle (14) erlangt wird, und
- Erkennen des möglichen Vorhandenseins eines Störsignals abhängig von mindestens einem der berechneten Eigenwerte und dem geschätzten Verhältnis von Störsignal plus Rauschen.

**7.** Empfangsvorrichtung (12), umfassend einen Rechner (16) nach Anspruch 6.

**8.** Plattform (10), umfassend eine Aufnahmevorrichtung (12) nach Anspruch 7 oder einen Rechner (16) nach Anspruch 6.

**9.** Computerprogrammprodukt, umfassend einen lesbaren Informationsträger, auf dem ein Computerprogramm umfassend Programmanweisungen gespeichert ist, wobei das Computerprogramm auf eine Datenverarbeitungseinheit geladen werden kann und angepasst ist, um die Durchführung mindestens eines Schritts des Verfahrens einem der Ansprüche 1 bis 5 zu bewirken, wenn das Computerprogramm auf der Datenverarbeitungseinheit durchgeführt wird.

**10.** Lesbarer Informationsträger, umfassend Programmanweisungen, die ein Computerprogramm bilden, wobei das Computerprogramm auf eine Datenverarbeitungseinheit geladen werden kann und angepasst ist, um die Durchführung von mindestens einem Schritt eines Verfahrens nach einem der Ansprüche 1 bis 5 zu bewirken, wenn das Computerprogramm auf der Datenverarbeitungseinheit ausgeführt wird.

**Claims**

**1.** Method for detecting any presence of an interference signal in a signal received by a receiving device (12), the received signal comprising a wanted component and an unwanted component, the receiving device (12) comprising N receiving channels (14) and a computer (16), N being an integer greater than or equal to 2, the method being implemented by the computer (16), the method comprising a step for:

- obtaining at least one matrix among an autocorrelation matrix of the signal received by each receiving channel (14), and an autocorrelation matrix of the unwanted component so as to obtain at least one determined matrix,
- calculating the eigenvalues of the at least one determined matrix,
- estimating the signal to interference plus noise ratio of the recombined signal, the recombined signal being obtained by recombination of the signals of each of the N receiving channels (14), and
- detecting any presence of an interference signal as a function of at least one of the calculated eigenvalues and of the estimated signal to interference plus noise ratio.

**2.** Method according to claim 1, wherein the detection step comprises:

- applying a function to at least one eigenvalue, to obtain a value,
- comparison of the obtained value to a threshold depending on the estimated signal to interference plus noise ratio, and
- detecting any presence of interference as a function of the result of the comparison.

**3.** Method according to claim 2, wherein the function is an identity function, a linear function, a trace function, a division function or a multiplication function.

4. Method according to any one of claims 1 to 3, wherein, during the detection step, each eigenvalue is chosen from the list made up of the largest eigenvalue of the autocorrelation matrix of the received signal, the largest eigenvalue of the autocorrelation matrix of the unwanted component, the smallest eigenvalue of the autocorrelation matrix of the received signal, the smallest eigenvalue of the autocorrelation matrix of the unwanted component.

5. Method according to any one of claims 1 to 5, wherein the method further includes a step for an estimator of the power ratio between the power of the interference signal and the power of the thermal noise of the receiving device (12), the estimator depending on the calculated eigenvalues.

6. A computer (16) adapted to detect any presence of an interference signal in a signal received by a receiving device (12), the received signal comprising a wanted component and an unwanted component, the receiving component (12) comprising N receiving channels (14), N being an integer greater than or equal to 2, the computer (16) being able to:

   - obtain at least one matrix among an autocorrelation matrix of the signal received by each receiving channel (14), and an autocorrelation matrix of the unwanted component so as to obtain at least one determined matrix,
   - calculate eigenvalues of the at least one determined matrix,
   - estimate the signal to interference plus noise ratio of the recombined signal, the recombined signal being obtained by recombination of the signals of each of the N receiving channels (14), and
   - detect any presence of an interference signal as a function of at least one of the calculated eigenvalues and of the estimated signal to interference plus noise ratio.

7. A receiving device (12) comprising a computer (16) according to claim 6.

8. A platform (10) comprising a receiving device (12) according to claim 7 or a computer (16) according to claim 6.

9. A computer program product including a readable information medium, on which a computer program is stored comprising program instructions, the computer program being able to be loaded on a data processing unit and suitable for driving the implementation of at least one step of a method according to any one of claims 1 to 5 when the computer program is implemented on the data processing unit.

10. A readable information medium including program instructions forming a computer program, the computer program being able to be loaded on a data processing unit and suitable for driving the implementation of at least one step of a method according to any one of claims 1 to 5 when the computer program is implemented on the data processing unit.

## FIG.1

```
┌─────────────────────────┐
│           E50           │
└─────────────────────────┘
             │
             ▼
┌─────────────────────────┐
│           E52           │
└─────────────────────────┘
             │
             ▼
┌─────────────────────────┐
│           E54           │
└─────────────────────────┘
             │
             ▼
┌─────────────────────────┐
│           E56           │
└─────────────────────────┘
```

## FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2579063 A

- US 2010130133 A